# EUROPEAN PATENT SPECIFICATION

(11) **EP 0 401 212 B1**
(45) Date of publication and mention of the grant of the patent: **25.01.1995**
(21) Application number: 88902672.0
(22) Date of filing: 18.02.1988
(51) Int. Cl.: F16B 13/04, F16B 39/02, F16B 39/00

(54) **VACUUM FIXED ADHESIVELY SECURED FASTENER**
DURCH VAKUUM BEFESTIGTE UND DURCH KLEBKRAFT GESICHERTE BEFESTIGUNGSVORRICHTUNG
DISPOSITIF DE FIXATION FIXE PAR ASPIRATION ET ASSUJETTI PAR ADHESION

(43) Date of publication of application: 12.12.1990
(73) Proprietor: SWEENEY, Theodore J., Grosse Pointe City, MI 48230 (US); MEYER, Englebert A., Sun City, CA 92381 (US)
(72) Inventor: SWEENEY, Theodore J., Grosse Pointe City, MI 48230 (US); MEYER, Englebert A., Sun City, CA 92381 (US)
(74) Representative: Lemke, Jörg-Michael, Dipl.-Ing.
(86) International application number: PCT/US88/00499
(87) International publication number: WO 89/07718

(56) References cited:
- CA-A- 701 599
- DE-U- 8 713 953
- US-A- 1 859 893
- US-A- 2 432 719
- US-A- 2 451 194
- US-A- 3 308 585
- US-A- 4 389 035
- US-A- 4 390 576
- US-A- 4 421 288
- US-A- 4 631 887
- US-A- 4 668 546

## Description

### Field of Invention

This invention relates to adhesively secured fasteners, such as fasteners which may be adhesively secured to a substrate and thereafter utilized to secure another part or parts to the substrate.

### Background of the Invention

US-A 2 432 719 discloses the prior art with regard to the subject matter of the invention. Such art teaches a vacuum fixed adhesively secured fastener having a body member with a vacuum cup 1 thereon for flattening against a substrate to temporarily hold the body member thereto and defining an interface therebetween, a reservoir 5 on the body member for containing an adhesive 11, a plunger 8 cooperating with the reservoir 5 for displacement thereinto to expell adhesive 11 from the reservoir 5, and after having distributed the adhesive expelled from the reservoir, pressing the fastener to the substrate.

With the advent of quick setting adhesives, such as adhesives which will cure from a liquid to a solid phase in but a few seconds, increasing attention has been given to utilization of such adhesives in the automotive industry for the attachment of trim or other components to automobile bodies. In a production environment where the body is moving on a conveyor line, and the parts to be secured are brought to the moving body and but a few moments are available for securing the parts to the body, a problem has arisen as to how to hold the fasteners to the parts or the automobile body, as the case may be, while the quick setting adhesive goes from its liquid phase to its solid phase, i.e., changes state sufficiently so that a fastener will be retained.

Heretofore it has been common practice to secure parts together using adhesives by clamping them for a sufficient length of time that the adhesive could cure or set. On large or irregularly shaped automotive body panel, clamping the fasteners thereagainst involves a cumbersome inefficient production step best avoided. While fasteners may be temporally secured to the substrate by piercing the substrate and having a portion of the fastener extend through the resulting hole to temporarily lock the fastener to the substrate while adhesive thereon sets, such as shown in the above mentioned related cases, the resulting perforations of the substrate create serious corrosion and other problems. Accordingly, it is desirable to be able to avoid the necessity of clamping fasteners against a body panel without resort to external devices and yet not effect the clamping by virtue of piercing the panel.

Another problem confronting the fastener designs is the retention of the adhesive in a non-reactive state within or on the fastener and providing some way that the adhesive can be suddenly made reactive and be deposited at the point of intended use.

### Summary of the Invention

A method and fasteners according to the invention have the features according to the independent claims 1, 2 and 4.

We have disclosed a fastener utilizing a quick setting adhesive which may be temporarily fixed against a substrate without piercing the same and without the necessity of extraneous clamps to hold the fastener against the substrate while the adhesive sets. We accomplish this by providing the fastener with a vacuum cup. The fastener is also provided with an adhesive reservoir containing the quick setting adhesive. In use, the fastener is pressed against the substrate to flatten the vacuum cup and temporary affix the fastener to the substrate. Simultaneously, the adhesive reservoir is actuated to expel adhesive therefrom into the interface between the fastener body and the substrate. Upon setting of the adhesive, the fastener is securely and permanently attached to the substrate.

The construction of the fastener is such that the adhesive is contained within an adhesive reservoir within the fastener so that the fastener may be handled without contaminating the workman or the apparatus prior to actual use of the fastener. Two similar yet different approaches to the design of a fastener embodying the invention is disclosed.

The fastener body which is to be adhesively secured to a substrate is formed of a material to which the adhesive will adhere, while the reservoir and means for controlling egress of adhesive therefrom is formed of a material to which the adhesive either will not adhere or will not cause the adhesive to set up while stored therein or in contact therewith.

The dependent claims set out particular embodiements of the invention.

### Brief Description of the Drawings

Fig. 1 is a top plan view of a first embodiment of the fastener;
Fig. 2 is a cross-sectional view taken on line 2-2 of Fig. 1;
Fig. 3 is a cross-sectional view taken substantially on the line 3-3 of Fig. 2;
Fig. 4 is a cross-sectional view similar to Fig. 2 but showing the fastener applied to a substrate with the vacuum cup flattened thereagainst.
Fig. 5 is a plan view of a second embodiment of a fastener incorporating the invention;
Fig. 6 is a cross-sectional view taken on the line 6-6 of Fig. 5;
Fig. 7 is a plan view of a female fastener element for use with the fastener shown in Figs. 1 and 2 or 5 and 6;
Fig. 8 is a cross-sectional view through the fastener element of Fig. 7 taken on the line 8-8;
Fig. 9 is a cross-sectional view taken on the line 9-9 of Fig. 6.
Fig. 10 is a cross-sectional view similar to Fig. 6 showing the fastener flattened against a substrate; and
Fig. 11 is a view similar to Fig. 10 showing the fastener element of Figs. 7 and 8 attached to the fastener shown in Figs. 5 and 6 and retaining a part to the substrate.

### Brief Description of the Preferred Embodiments

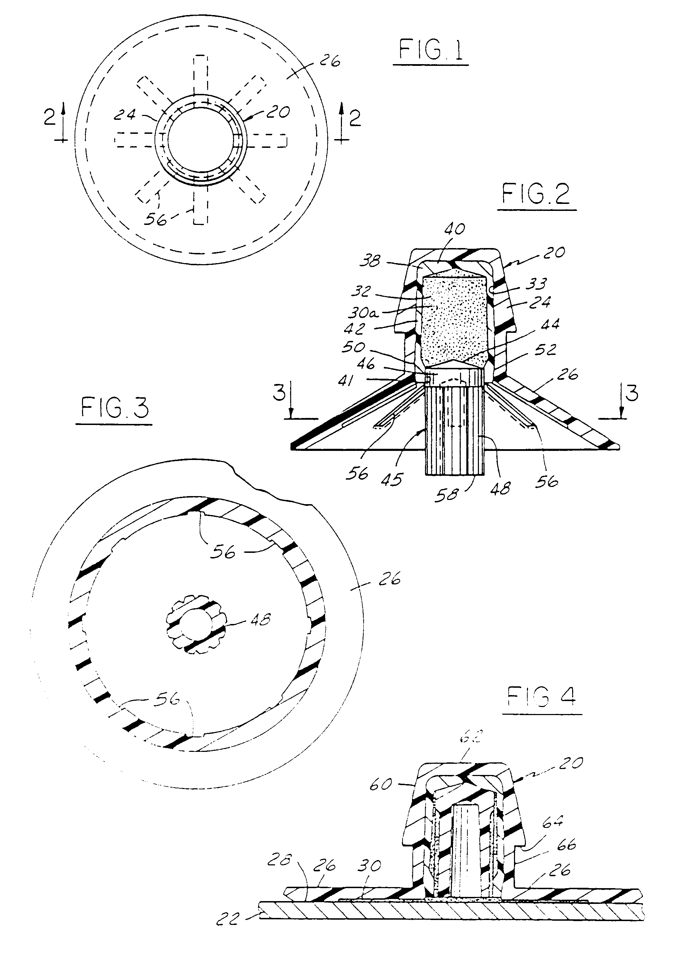

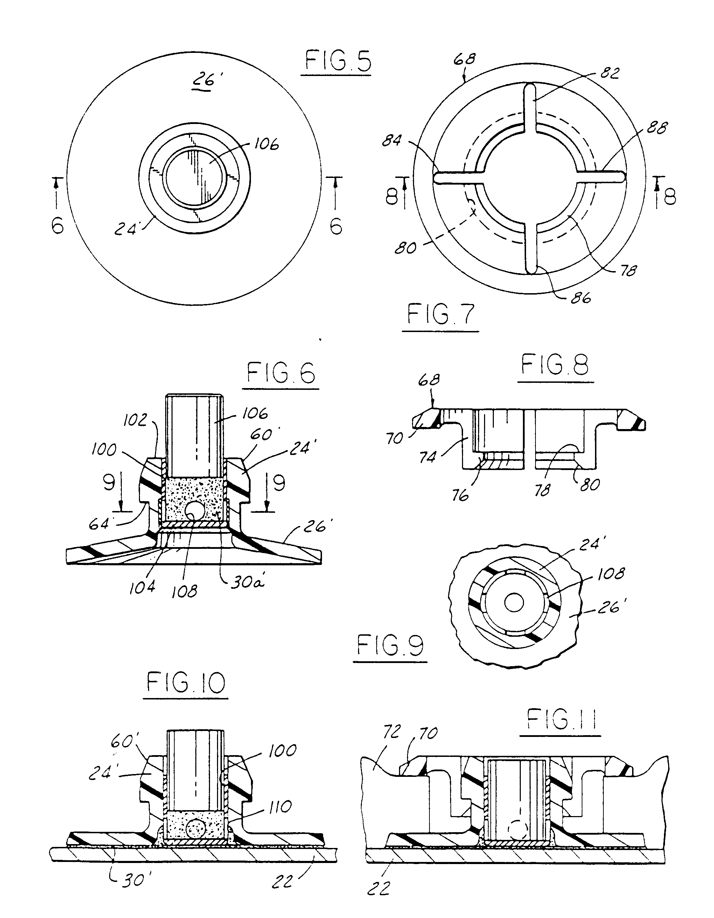

The invention herein disclosed is shown in two embodiments, the first being shown in Figs. 1-4 inclusive and the second in Figs. 5, 6 and 9-11. These two embodiments are generally similar though they differ somewhat in design and construction. The embodiment shown in Figs. 1-4 inclusive will be described first and comprises a vacuum fixed adhesively secured fastener 20 for attachment to a substrate 22. The fastener includes a body member 24 having a vacuum cup 26 thereon for flattening against the substrate 22 to temporarily hold the body member thereto. As best shown in Fig. 4, the vacuum cup 26 and the substrate 22 define therebetween an interface 28 into which a quick setting adhesive 30 is inserted, as hereinafter described, for permanently securing the body member to the substrate.

The body member 24 contains a reservoir 32 for holding a quick setting adhesive 30a as best shown in Fig. 2. In this embodiment the reservoir is defined by a chamber member 38 of generally cylindrical configuration closed by an end wall 40 and provided with an encircling cylindrical side wall 42. The chamber is a press fit within a cylindrical recess or pocket 33 in the body member. The end of the chamber opposite wall 40 is open as at 41 adjacent the interior of the vacuum cup. Such end of the chamber is closed by a wall portion 44 which is displaceable inwardly of the chamber as hereinafter described.

The inwardly displaceable wall 44 in the embodiment of Figs. 1-4 comprises a plunger member 45 having a circumferential land 46 which in a first position of the plunger shown in Fig. 2 blocks egress of the adhesive 30a from the chamber 38. The plunger is provided, as best shown in Fig. 2 and 3, with one or more adhesive exit passages 48 (12 such being shown in Fig. 3). Such passages serve to permit egress of the adhesive 30a within the chamber 38 upon displacement of the plunger from the first position shown in Fig. 2 to a second position shown in Fig. 4. When the land 46 passes through the opening 41 the passages 48 are then exposed to the adhesive 30a within the chamber and the pressure created on the adhesive as the plunger is moved thereagainst causes the adhesive to be expelled along the passages 48 into the interface 28 between the vacuum cup and the substrate 22.

In the form shown, the chamber 38 is provided with a beveled surface 50 surrounding its open end. The entrance 52 to the pocket 33 in the fastener body 24 is also tapered to match the taper 50. The chamber 38 with its plunger 45 inserted therein such that the land 46 locks the escape of adhesive 30a is pressed into the pocket 33 in the body member to the position shown in Fig. 2 at which the tapers 50 and 52 will cooperate to retain the chamber within the body member.

The fastener body 24 should be fabricated from a resilient plastic to permit the expansion of the body member adjacent the opening 52 to permit longitudinal introduction of the chamber 38 thereinto and the consequent clamping by the body at its taper 52 against the corresponding taper 50 of the chamber 38. In addition, if the body member and vacuum cup are to be made of the same material, the plastic material of which the body member is formed should be sufficiently resilient as to provide for the vacuum cup 26 which must be capable of flattening against the substrate 22 from the position shown in Fig. 2 to that shown in Fig. 4. The body member 24 may be formed of a vinyl plastic having a hardness of Shore A75 plus or minus 2. The plastic selected must be of the type to which the adhesive will adhere when allowed to come into contact therewith. Other suitable plastic may also be used.

The plunger 45 and chamber 38 on the other hand should be formed of polypropylene, or any other plastic to which the adhesive will either not adhere or will not cause the adhesive to begin to set up. Thus the material of the reservoir and plunger will be different than the material of the fastener body, and the adhesive is effectively isolated from the fastener body until the adhesive is expelled from the container into contact with the fastener body.

To insure uniform distribution of the adhesive as it moves from the reservoir into the interface 28 distributing means are provided comprising a plurality of grooves 56 formed on the underside of the vacuum cup and extending from a point adjacent the opening at the end of the chamber opposite the wall 40 to a point substantially 2/3 of the length of the vacuum cup skirt. The length and number of these grooves may be varied in accordance with the designer's requirement. The grooves serve to provide adhesive flow passageways in the interface when the vacuum cup is flattened against the substrate 22 so that the adhesive is substantially uniformly delivered throughout the interface.

The adhesive is expelled from the adhesive reservoir by virtue of the end 58 of the plunger butting the substrate 22 as the fastener body 24 is urged toward the substrate to flatten the vacuum cup 26. In the embodiment shown there is sufficient resilience in the chamber 38 and body member 24 and/or sufficient air space within the chamber above adhesive 30a so that the plunger may be displaced into the chamber sufficiently to expose the upper ends of the passages 48 to the adhesive. Once the passages 48 are exposed to the adhesive, the same is expelled along the passages and into the interface as aforesaid during continued flattening of the vacuum cup until the parts have reached the position shown in Fig. 4 where the plunger is fully inserted into the chamber and the adhesive has been substantially completely expelled and is disposed within the passages 48, the grooves 56 and spread throughout the interface 28.

The body member 24 may desirably be shaped to facilitate securement of a part to be fastened to the substrate. As one design, though any number may occur to the fastener designer, the body member may be provided with a head having a tapered surface 60 which expands radially from the top wall 62 to an undercut shoulder 64. The shoulder 64 spaced above the vacuum cup 26 to provide a generally cylindrical area 66. A complimentary female fastener element 68 (see Figs. 7 and 8) is intended to be snapped down over the head 60 to result in a coupling similar to that shown in Fig. 11. The female element is generally hat-shaped having a brim portion 70 intended to surround the adhesively secured fastener and abut the part 72 to be held against the substrate 22. The brim 70 is a continuous annulus having a crown portion 74 terminating in an internal lip 76. The lip has a catch surface 78 and a camming wedge surface 80. The crown 74 is desirably slit such as at the four kerfs 82, 84, 86 and 88 which extend from adjacent the brim 70 across the wall thickness of the crown 74. The female element 68 may be formed of any suitable plastic such as a polycarbonate or the like.

The female element 68 is snapped over the fastener body 24 by pressing the female element down over the head. The camming wedge surface 80 will engage the sloping surface of the body member and cause the crown 74 to spread at the kerfs 82, 84, 86 and 88 until the lip 76 snaps beneath the shoulder 64 locking the female element on the head of the fastener body. The brim 70 will bear against the part 72 securing it to the substrate. In the embodiment illustrate in Fig. 11 which is representative of an application for the invention herein disclosed, an insulating matt or the like may represent the part 72 secured to the substrate.

In the second embodiment shown in Figs. 5, 6, 9-11, the fastener body 24′ is provided with a vacuum cup 26′. The body 24′ has an internal through aperture 100 opening from the top 102 into the vacuum cup interior at the opposite end. Within the opening 100 is disposed an adhesive reservoir having a displaceable wall. The adhesive reservoir in the illustrated embodiment comprises a cup-shaped chamber 104 closed at one end and open at the opposite end within which is slideably received a plunger 106 comprising the displaceable wall of the reservoir above mentioned. The chamber 104 is provided adjacent its closed end with side opening apertures 108. The chamber is longitudinally shiftable in the body member 24′ between a first position shown in Fig. 6 and a second position shown in Fig. 10. In the Fig. 6 position the side opening ports 108 are blocked by the encircling wall of the body member 24′ while in the position shown in Fig. 10 the ports are unblocked so that adhesive in the chamber 104 may be expelled into the vacuum cup and specifically the interface between the vacuum cup and the substrate 22 as shown at 30′.

In use, the adhesive 30a′ is trapped within the chamber 104 so as not to contaminate the workman or the parts. When it is desired to apply the fastener to a substrate, the vacuum cup 26′ is placed against the substrate and the plunger 106 is depressed urging it into the chamber 104. This pressurizes the adhesive within the chamber and causes the chamber itself to be displaced toward the substrate. During such displacement, the vacuum cup is flattened against the substrate and at the same time the adhesive 30a′ is expelled through the ports 108 and into the interface between the vacuum cup and the substrate. While not shown in this second embodiment, grooves similar to the grooves 56 shown in the first embodiment may be provided in the underside of the vacuum cup's skirt to facilitate distribution of the adhesive throughout the interface. It is will be noted particularly in Fig. 10 that the body member 24′ has an enlarged counterbore portion 110 which surrounds the open inner end of the through aperture 100 thereby facilitating expulsion of the adhesive from the reservoir.

The body member 24′ may be provided with a head 60′ generally similar to that of the first embodiment for cooperation with a female fastener such as element 68 shown in Figs. 7 and 8.

By way of example, but not by way of limitation, if the adhesive to be used is an anaerobic, 3M Scotch-Grip #2353 manufactured by Minnesota Mining Manufacturer may be used. If the adhesive is a cyanoacrylate, Loctite 414, manufactured by Loctite Corporation, Newington, Connecticut may be used. If an epoxy resin is desired, Goodrich E 2102B, E2101A or E2101B manufactured by B.V. Goodrich Chemical Co., Cleveland, Ohio. A suitable urethane adhesive may be purchased from UPACO, Adhesive, Inc. 3 E. Spitbrook Road, Nashua, New Hampshire.

## Claims

1. A method for adhesively permanently securing a vacuum cup fastener (20) to a substrate (22) without piercing the substrate (22), comprising the steps of:
pressing the vacuum cup (26) against the substrate (22), expelling a quick setting reactive adhesive (30a) throughout an interface (28) between said fastener (20) and said substrate (22): and temporarily holding said fastener (20) to said substrate (22) at said interface (28) with the vacuum of the vacuum cup (26) for a sufficient time to permit said adhesive (30a) to quick set by changing from a non-reactive state to a reactive state, whereby to permanently attach said fastener (20) to said substrate (12).

2. A vacuum fixed adhesively secured fastener (20) for permanent attachment to a substrate (22), for carrying out the method according to claim 1, comprising in combination:
a body member (24) having the vacuum cup (26) thereon for flattening against the substrate (22) to temporarily hold the body member (24) thereto and defining the interface (28) therebetween;
a reservoir (32) on the body member (24) for containing the quick setting adhesive (30a);
plunger means (45) on the body member (24) cooperating with the reservoir (30a) for displacement thereinto as the vacuum cup (26) is flattened;
said reservoir (32) and plunger means (45) being formed as a valve in a manner to isolate the adhesive (30a) temporarily from the body member (24) prior to the displacement of the plunger means (45) into the reservoir (30a) to keep quick setting adhesive in a non-reactive state; and
the volume of the reservoir (32) being reduced as the plunger means (45) is displaced thereinto to open the valve and to expel adhesive (30a) in the reservoir (32) into the interface (28) between the body member (24) and the substrate (22) against which the vacuum cup (26) is flattened to permit the adhesive (30a) to change to a reactive state and to secure the body member (24) to the substrate (22).

3. The fastener (20) defined by claim 2 wherein said adhesive reservoir (32) comprises a chamber (38) open at one end (41) facing the vacuum cup (26) and the plunger (45) is shiftably disposed in said open end (41) and projects through the vacuum cup (26) and has a circumferential land (46) disposed to block the opening when the plunger (45) is disposed in a first position said plunger (45) having an exit passage (48) for discharging adhesive (30a) from the chamber (38) when the plunger (45) has been shifted to a second position (Fig. 4), and said plunger (45) having an end (58) for abutting a substrate (22) against which the vacuum cup (26) is to be flattened and displacing the plunger (45) from the first to the second position during such flattening.

4. A vacuum fixed adhesively secured fastener (20) for permanent attachment to a substrate (22) for carrying out the method according to claim 1, having a body member (24′) with a vacuum cup (26′) thereon for flattening against the substrate (22) to temporarily hold the body member (24′) thereto and defining an interface (28) therebetween, a reservoir on the body member for containing a quick setting adhesive (30a′), a plunger (106) cooperating with the reservoir for displacement thereinto as the vacuum cup (26′) is flattened, the reservoir being a hollow chamber member (104) shiftably mounted in the body member (24′) and having an adhesive egress port (108) adjacent the vacuum cup (26′), said chamber member (104) being shiftable between a first position in which said port (108) is blocked and a second position (Fig. 10) in which it is open, and said chamber member (104) being shiftable from the first to the second position during inward displacement of said plunger (106) to allow escape of adhesive (30a′) into said distributing means for distribution (30′) throughout the interface.

5. The fastener (20) defined by any preceding claim 2-4 having distributing means (56) for receiving adhesive (30a) expelled from the reservoir (32) and distributing it throughout said interface (28).

6. The fastener (20) defined by claim 5 having distributing means (56) extending substantially 2/3 of the length of the vacuum cup for distributing the adhesive throughout said interface (28-Fig. 4).

7. The fastener (20) defined by any preceding claim 2-6 wherein the reservoir (32) is formed of a material which is non-reactive with adhesive (30a, 30a′) in the reservoir (32) and the vacuum cup (26, 26′) is formed of a material which will readily adhere to the adhesive (30a, 30a′) in the reservoir (32).

## Patentansprüche

1. Verfahren zur adhäsiven dauerhaften Fixierung einer Vakuumnapf-Befestigungsvorrichtung (20) an einem Substrat (22) ohne ein Durchstoßen des Substrats (22), bestehend aus folgenden Schritten:
Drücken des Saugnapfs (26) gegen das Substrat (22), Herausdrücken eines schnellhärtenden, reaktiven Klebstoffs (30a) und Verteilen desselben über eine Grenzfläche (28) zwischen der Befestigungsvorrichtung (20) und dem Substrat (22);
sowie zeitweises Festhalten der Befestigungsvorrichtung (20) an dieser Grenzfläche (28) gegen das Substrat mittels des Vakuums des Saugnapfes (26) während einer Zeitspanne, die für den Klebstoff (30a) ausreicht, um durch Wechsel aus einem nichtreaktiven Zustand in einen reaktiven Zustand schnell zu erhärten und dadurch die Befestigungsvorrichtung (20) dauerhaft an dem Substrat (22) zu befestigen.

2. Durch Vakuum befestigte und durch Klebkraft gesicherte Befestigungsvorrichtung zur dauerhaften Befestigung an einem Substrat (22) zur Ausführung des Verfahrens nach Anspruch 1, die in Kombination umfaßt:
Einen Körper (24) mit einem daran vorgesehenen Saugnapf (26) zum flachen Andrücken gegen das Substrat (22), um den Körper (24) zeitweise daran festzuhalten und die Grenzfläche (28) zwischen denselben zu definieren:
ein Reservoir (32) am Körper (24) für die Aufnahme des schnellhärtenden Klebstoffs (30a);
einen Plunger (45) am Körper (24), der mit dem Reservoir (32) im Sinne einer Verlagerung in dasselbe hinein zusammenarbeitet, während der Saugnapf (26) flachgedrückt wird:
wobei das Reservoir (32) und der Plunger (45) als ein Ventil derart ausgebildet sind, daß sie den Klebstoff (30a) zeitweise von dem Körper (24) isolieren, und zwar vor der Verlagerung des Plungers (45) in das Reservoir (30a) hinein, um den schnellhärtenden Klebstoff in einem nichtreaktiven Zustand zu halten; und
wobei das Volumen des Reservoirs (32) bei der Verlagerung des Plungers (45) in dasselbe hinein verkleinert wird, um das Ventil zu öffnen und den in dem Reservoir (32) befindlichen Klebstoff (30a) in die Grenzfläche (28) zwischen dem Körper (24) und dem Substrat (22) hineinzudrücken, gegen welches der Saugnapf (26) flachgedrückt wird, um es dem Klebstoff (30a) zu ermöglichen, in einen reaktiven Zustand zu wechseln und den Körper (24) an dem Substrat (22) zu sichern.

3. Befestigungsvorrichtung (20) nach Anspruch 2, bei welcher das Reservoir (32) für den Klebstoff eine an einem Ende (41) offene Kammer (38) aufweist, die dem Saufnapf (26) gegenüberliegt, wobei der Plunger (45) in dem offenen Ende (41) verschiebbar angeordnet ist, durch den Saugnapf (26) vorsteht und einen Umfangsbund (26) besitzt, der derart angeordnet ist, daß er die Öffnung blockiert, solange der Plunger (45) in einer ersten Stellung angeordnet ist, wobei der Plunger (45) eine Ausgangsöffnung (48) für die Abgabe von Klebstoff (30a) aus der Kammer (38) besitzt, sobald der Plunger (45) in eine zweite Stellung (Fig. 4) verschoben worden ist, und wobei der Plunger (45) ein für die Anlage an einem Substrat (22) bestimmtes Ende (58) aufweist, gegen welches der Saugnapf (26) flachzudrücken ist, und wobei der Plunger (45) sich während dieses Flachdrückens aus der ersten in die zweite Stellung verlagert.

4. Durch Vakuum befestigte und durch Klebkraft gesicherte Befestigungsvorrichtung (20) für eine dauerhafte Befestigung an einem Substrat (22) zur Ausführung des Verfahrens nach Anspruch 1, mit einem Körper (24′) mit einem daran vorgesehenen Saugnapf (26′) zum Flachdrücken gegen das Substrat (22), um den Körper (24′) zeitweise gegen dasselbe zu halten und eine Grenzfläche (28) zwischen beiden zu definieren, mit einem am Körper vorgesehenen Reservoir für die Aufnahme eines schnellhärtenden Klebstoffs (30a′) und einem Plunger (106), der sich in das Reservoir hinein verlagert, wenn der Saugnapf (26′) flachgedrückt wird, wobei das Reservoir ein hohles Kammerelement (104) ist, das in dem Körper (24′) verschieblich montiert ist und dem Saugnapf (26′) benachbart eine Austrittsöffnung (108) für den Klebstoff aufweist, wobei das Kammerelement (104) zwischen einer ersten Stellung, in welcher die Öffnung (108) blockiert ist, und einer zweiten Stellung (Fig. 10), in welcher dieselbe offen ist, verschieblich ist, und wobei das Kammerelement (104) von der ersten in die zweite Stellung verschiebbar ist, während sich der Plunger (106) in dasselbe hinein verlagert, um den Austritt von Klebstoff (30a′) in eine Verteileinrichtung zwecks Verteilung (30′) über die Grenzfläche zu ermöglichen.

5. Befestigungsvorrichtung (20) nach einem der vorhergehenden Ansprüche 2 bis 4 mit einer Verteileinrichtung (56) für die Aufnahme von Klebstoff (30a), der aus dem Reservoir (32) herausgedrückt worden ist, und für die Verteilung desselben über die Grenzfläche (28).

6. Befestigungsvorrichtung (20) nach Anspruch 5 mit einer Verteileinrichtung (56), die sich im wesentlichen über 2/3 der Länge des Saugnapfes für die Verteilung des Klebstoffs über die Grenzfläche (28-Fig. 4) erstreckt.

7. Befestigungsvorrichtung (20) nach einem der vorhergehenden Ansprüche 2 bis 6, bei welcher das Reservoir (32) aus einem Material hergestellt ist, das mit dem Klebstoff (30a, 30a′) in dem Reservoir (32) nicht reagiert, und bei welcher der Saugnapf (26, 26′) aus einem Material hergestellt ist, das sich besonders gut mit dem Klebstoff (30a, 30a′) in dem Reservoir (32) verbindet.

## Revendications

1. Procédé pour fixer à un substrat (22) de façon permanente et adhésive une attache (20) à ventouse sans percer le substrat (22), comprenant les étapes suivantes :
presser la ventouse (26) contre le substrat (22) ;
refouler un adhésif réactif à prise rapide (30a) à travers une interface (28) entre la dite attache (20) et le dit substrat (22) ; et
maintenir temporairement la dite attache (20) contre le dit substrat (22) à la dite interface (28) avec le vide de la ventouse (26) pendant un temps suffisant pour permettre au dit adhésif (30a) de prendre rapidement en passant d'un état non-réactif à un état réactif, de manière à fixer de façon permanente la dite attache (20) au dit substrat (22).

2. Attache (20) fixée par aspiration et maintenue par adhésif pour une fixation permanente à un substrat (22), pour mettre en oeuvre le procédé selon la revendication 1, comprenant en combinaison :
un élément de corps (24) pourvu d'une ventouse (26) destinée à s'aplatir contre le substrat (22) pour maintenir temporairement l'élément de corps (24) contre lui et définir une interface (28) entre eux ;
un réservoir (32) sur l'élément de corps (24), destiné à contenir un adhésif à prise rapide (30a) ;
un plongeur (45) sur l'élément de corps (24), coopérant avec le réservoir (32) pour être déplacé à l'intérieur de ce dernier lorsque la ventouse (26) est aplatie ;
le dit réservoir (32) et le dit plongeur (45) étant formés comme une valve de manière à isoler temporairement l'adhésif (30a) de l'élément de corps (24) avant le déplacement du plongeur (45) à l'intérieur du réservoir (32) pour garder l'adhésif à prise rapide en un état non-réactif ; et
le volume du réservoir (32) étant réduit lorsque le plongeur (45) est déplacé à l'intérieur de celui-ci pour ouvrir la valve et refouler l'adhésif (30a) du réservoir vers l'interface (28) entre l'élément de corps (24) et le substrat (22) contre lequel la ventouse (26) est aplatie pour permettre à l'adhésif de passer à un état réactif et fixer l'élément de corps (24) au substrat (22).

3. Attache (20) selon la revendication 2 dans laquelle le dit réservoir (32) d'adhésif comprend une chambre (38) ouverte à une extrémité (41) en regard de la ventouse (26) et le plongeur (45) est disposé de façon coulissante dans la dite extrémité ouverte (41) et fait saillie dans la ventouse (26) et présente une zone circonférentielle (46) disposée pour fermer l'ouverture lorsque le plongeur (45) est disposé dans une première position, le dit plongeur (45) ayant un passage de sortie (48) pour refouler l'adhésif (30a) de la chambre (38) lorsque le plongeur (45) a été poussé vers une deuxième position (Figure 4), et le dit plongeur (45) ayant une extrémité (58) venant en butée contre un substrat (22) contre lequel la ventouse (26) doit être aplatie et déplaçant le plongeur (45) de la première position vers la deuxième position lors de l'aplatissement.

4. Attache (20) fixée par aspiration et maintenue par adhésif pour une fixation permanente à un substrat (22), pour mettre en oeuvre le procédé selon la revendication 1, ayant un élément de corps (24′) pourvu d'une ventouse (26′) destinée à s'aplatir contre un substrat (22) pour maintenir dessus temporairement l'élément de corps (24′), et définissant une interface (28) entre eux, un réservoir sur l'élément de corps pour contenir un adhésif à prise rapide (30a′), un plongeur (106) coopérant avec le réservoir pour être déplacé à l'intérieur de celui-ci lorsque la ventouse (26′) est aplatie, le réservoir étant une chambre creuse (104) montée de façon coulissante dans l'élément de corps (24′) et ayant un conduit (108) d'échappement de l'adhésif à proximité de la ventouse (26′), la dite chambre (104) étant coulissante entre une première position dans laquelle le dit conduit (108) est fermé, et une deuxième position (Figure 10) dans laquelle il est ouvert, et la dite chambre (104) étant coulissable entre la première et la deuxième position lors d'un déplacement vers l'intérieur du dit plongeur (106) pour permettre l'échappement de l'adhésif (30a′) dans le dit moyen de distribution pour une distribution (30′) à travers l'interface.

5. Attache (20) selon l'une quelconque des revendications précédentes 2 à 4 ayant un moyen de distribution (56) pour recevoir l'adhésif (30a) refoulé du réservoir (32) et le distribuant à travers la dite interface (28).

6. Attache (20) selon la revendication 5 ayant un moyen de distribution (56) s'étendant substantiellement sur les deux tiers de la longueur de la ventouse pour distribuer l'adhésif à travers la dite interface (28 - Figure 4).

7. Attache (20) selon l'une quelconque des revendications précédentes 2 à 6, dans laquelle le réservoir (32) est réalisé dans un matériau qui ne réagit pas avec l'adhésif (30a, 30a′) contenu dans le réservoir (32), et la ventouse (26, 26′) est réalisée dans un matériau qui adhérera rapidement à l'adhésif (30a, 30a′) contenu dans le réservoir (32).
